# EUROPÄISCHE PATENTSCHRIFT

(11) **EP 3 539 198 B1**
(45) Veröffentlichungstag und Bekanntmachung des Hinweises auf die Patenterteilung: **12.05.2021**
(21) Anmeldenummer: 17797625.5
(22) Anmeldetag: 10.11.2017
(51) Int. Cl.: H02J 50/12, E01C 19/23

(54) **BAUMASCHINE**
CONSTRUCTION MACHINE
ENGIN DE CHANTIER

(30) Priorität: 14.11.2016 DE 102016121724
(43) Veröffentlichungstag der Anmeldung: 18.09.2019
(73) Patentinhaber: Hamm AG, 95643 Tirschenreuth (DE)
(72) Erfinder: VÖLKEL, Werner, 92660 Neustadt (DE); BRAUNSCHLÄGER, Stefan, 95671 Bärnau (DE)
(74) Vertreter: Ruttensperger Lachnit Trossin Gomoll
(86) Internationale Anmeldenummer: PCT/EP2017/078829
(87) Internationale Veröffentlichungsnummer: WO 2018/087265

(56) Entgegenhaltungen:
- EP-A1- 2 645 533
- WO-A1-2017/033585
- WO-A2-2012/099965
- DE-A1-102011 080 973
- KR-A- 20130 064 872

## Beschreibung

Die vorliegende Erfindung betrifft eine Baumaschine, wie zum Beispiel einen zum Verdichten von Untergrund einzusetzenden Bodenverdichter.

Aus der DE 10 2011 088 576 A1 ist ein Bodenverdichter mit einer an einem Maschinenrahmen um eine Drehachse drehbar getragenen Verdichterwalze bekannt. Im Inneren der Verdichterwalze ist zur Bereitstellung von Information über den Bewegungszustand der Verdichterwalze ein Sensorsystem vorhergesehen, das eine Mehrzahl von Beschleunigungssensoren sowie eine Funk-Signalübertragungsanordnung zur Übertragung von Ausgangssignalen der Sensoren an eine bezüglich des Maschinenrahmens feststehend getragene Signalempfangseinheit umfasst. Die Sensoren sowie die Funk-Signalübertragungsanordnung sind Verbraucher elektrischer Energie, die durch eine im Inneren der Verdichterwalze vorgesehene Energiewandlereinheit, welche elektrische Energie aus der Bewegung der Verdichterwalze gewinnt, gespeist werden.

Eine Baumaschine gemäß dem Oberbegriff des Anspruchs 1 ist aus der EP 2 645 533 A1 bekannt. Bei dieser bekannten Baumaschine wird die elektrische Energie zum Betreiben eines in einem Unterwagen der als Bagger ausgebildeten Baumaschine angeordneten Elektroantriebsmotors zwischen dem Oberwagen und dem Unterwagen vermittels einer am Oberwagen vorgesehenen und als Senderspule wirkenden oberen Spule und einer an Unterwagen vorgesehenen und als Empfängerspule wirkenden unteren Spule drahtlos übertragen.

Die WO 2012/099965 A2 offenbart ein System zur kabellosen Energieübertragung. In Zuordnung zu einer Senderspule einer Senderanordnung ist ein Resonanzkreis mit einer Resonanzkreisspule und einem Resonanzkreiskondensator vorgesehen.

Es ist die Aufgabe der vorliegenden Erfindung, eine Baumaschine, beispielsweise einen Bodenverdichter mit einer an einem Maschinenrahmen drehbar getragenen

Verdichterwalze, vorzusehen, bei welcher eine effiziente Energieversorgung wenigstens eines in einem drehbaren Systembereich der Baumaschine vorgesehenen Verbrauchers elektrischer Energie gewährleistet werden kann.

Erfindungsgemäß wird diese Aufgabe gemäß Anspruch 1 gelöst durch eine Baumaschine, umfassend einen bezüglich eines Maschinenrahmens um eine Drehachse drehbaren Systembereich und an dem drehbaren Systembereich wenigstens einen Verbraucher elektrischer Energie, ferner umfassend eine Induktions-Energieübertragungsanordnung zur drahtlosen Energieübertragung in den drehbaren Systembereich, wobei die Induktions-Energieübertragungsanordnung eine Senderanordnung mit wenigstens einer Senderspule und an dem drehbaren Systembereich eine Empfängeranordnung mit wenigstens einer Empfängerspule umfasst.

Der Wirkungsgrad der Induktions-Energieübertragungsanordnung wird dadurch deutlich gesteigert, dass in Zuordnung zu wenigstens einer Senderspule ein Resonanzkreis vorgesehen ist, wobei der eine Resonanzkreisspule sowie einen Resonanzkreiskondensator umfasst.

Die vorliegende Erfindung nutzt den Effekt der magnetischen Induktion, um Energie aus einer bezüglich eines Maschinenrahmens im Wesentlichen feststehenden Senderanordnung zu einer an dem rotierenden Systembereich vorgesehenen Empfängeranordnung zu übertragen. Die Senderanordnung kann an ein Bordspannungssystem, beispielsweise ein 12 V-Spannungssystem der Baumaschine, angeschlossen sein, so dass grundsätzlich eine zuverlässige Speisung mit elektrischer Energie bereitgestellt ist.

Um im rotierenden Systembereich Verbraucher einsetzen zu können, die im Allgemeinen mit einer Gleichspannung zu versorgen sind, wird vorgeschlagen, dass in Zuordnung zu jeder Empfängerspule ein Gleichrichter zur Bereitstellung einer Gleichspannung vorgesehen ist.

Das Auftreten von Spannungsschwankungen im Rotationsbetrieb des drehbaren Systembereichs kann dadurch gemindert bzw. weitestgehend eliminiert werden, dass die Empfängeranordnung eine Mehrzahl von vorzugsweise in Umfangsrichtung um die Drehachse aufeinanderfolgend angeordneten Empfängerspulen umfasst. Dabei kann insbesondere vorgesehen sein, dass die Empfängerspulen mit wenigstens einem Verbraucher elektrischer Energie parallel verbunden sind.

Eine im Wesentlichen konstante Ausgangsspannung im Bereich der Empfängeranordnung kann ferner dadurch gewährleistet werden, dass die Senderanordnung wenigstens zwei vorzugsweise in Umfangsrichtung um die Drehachse auf einander folgend angeordnete Senderspulen umfasst.

Um aus der in einer Baumaschine im Allgemeinen als Gleichspannung vorhandenen Versorgungsspannung die für die Übertragung von Energie vermittels magnetischer Induktion erforderliche Wechselspannung bzw. den erforderlichen Wechselstrom generieren zu können, wird vorgeschlagen, dass die Senderanordnung einen Frequenzgenerator zur Umwandlung einer an einen Eingang des Frequenzgenerators angelegten Gleichspannung in eine an wenigstens eine Senderspule anzulegende Wechselspannung umfasst.

Zur effizienten Energieübertragung ist in Zuordnung zu jeder Senderspule ein wenigstens bereichsweise von der Senderspule umgebener Kern, vorzugsweise aus Metallmaterial, vorgesehen.

Um unter Ausnutzung eines derartigen Kerns durch magnetische Wechselwirkung Energie effizient in die Empfängeranordnung zu übertragen, ist der Kern E-förmig oder U-förmig ausgebildet, und die Senderspule umgibt einen E-Schenkel oder/und E-Steg oder einen U-Schenkel oder/und U-Steg des Kerns wenigstens bereichsweise.

Die Resonanzkreisspule ist den Kern wenigstens bereichsweise umgebend angeordnet.

Um den durch einen derartigen Resonanzkreis generierten Verstärkungseffekt möglichst effizient nutzen zu können, wird vorgeschlagen, dass eine Resonanzfrequenz des Resonanzkreises im Bereich der Frequenz der durch den Frequenzgenerator erzeugten Wechselspannung ist. Hierzu kann beispielsweise der Frequenzgenerator in seiner Frequenz abstimmbar sein. Alternativ oder zusätzlich kann der Resonanzkreis in seiner Resonanzfrequenz abstimmbar sein.

Die Prinzipien der vorliegenden Erfindung können dann besonders effizient eingesetzt werden, wenn die Baumaschine ein Bodenverdichter ist und der drehbare Systembereich eine Verdichterwalze ist. In einer Verdichterwalze wird vorteilhafterweise Information über den Bewegungszustand, beispielsweise eine Beschleunigung in Umfangsrichtung oder in vertikaler Richtung, generiert, um aufgrund dieser Information auf den Verdichtungszustand eines zu verdichtenden Untergrunds schließen zu können. Durch das erfindungsgemäß vorzunehmende Einkoppeln elektrischer Energie vermittels magnetischer Induktion wird eine zuverlässige, gleichwohl drahtlose Versorgung von in einer derartigen Verdichterwalze angeordneten Verbrauchern elektrischer Energie aus dem Bordspannungssystem eines Bodenverdichters heraus gewährleistet.

Die vorliegende Erfindung wird nachfolgend mit Bezug auf die beiliegenden Figuren detailliert beschrieben. Es zeigt:
- Fig. 1: einen Bodenverdichter;
- Fig. 2: in prinzipartiger Darstellung eine in Zuordnung zu einer Verdichterwalze des Bodenverdichters der Fig. 1 vorgesehene Induktions-Energieübertragungsanordnung;
- Fig. 3: in prinzipartiger Darstellung die Zusammenwirkung einer Senderspule mit einer Empfängerspule;
- Fig. 4: den grundsätzlichen Aufbau der Senderanordnung mit einer Senderspule und einem dieser zugeordneten Resonanzkreis.

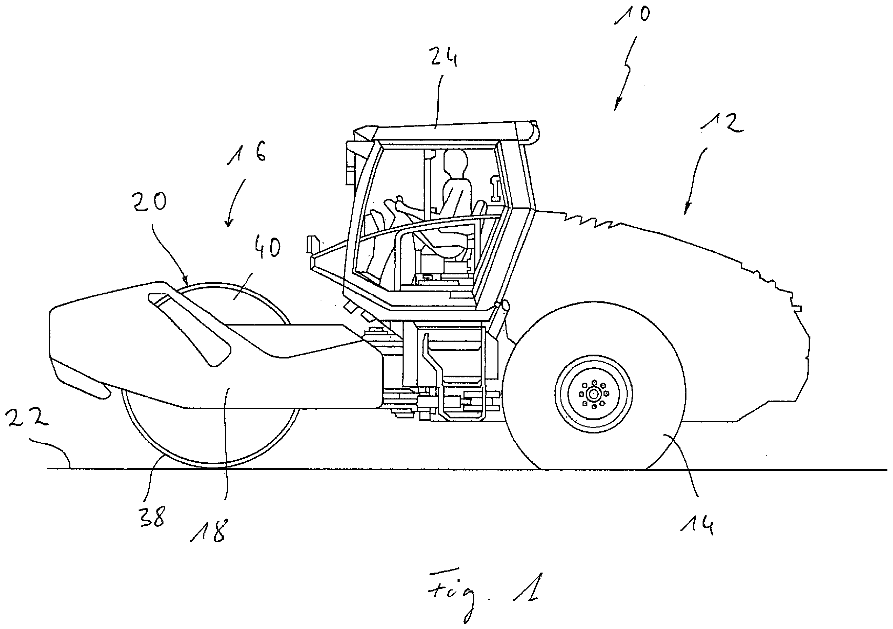

In Fig. 1 ist eine in Form eines Bodenverdichters 10 ausgeführte Baumaschine in Seitenansicht erkennbar. Der Bodenverdichter 10 umfasst einen Hinterwagen 12 mit durch ein dort auch vorgesehenes Antriebsaggregat angetriebenen Antriebsrädern 14. Ein bezüglich des Hinterwagens 12 schwenkbarer Vorderwagen 16 umfasst einen Maschinenrahmen 18, an welchem eine Verdichterwalze 20 um eine zur Zeichenebene der Fig. 1 im Wesentlichen orthogonale Drehachse drehbar ist, um bei der Voranbewegung des Bodenverdichters 10 einen Untergrund 22 zu verdichten.

Im Inneren der Verdichterwalze 20 können verschiedene Mechanismen vorgesehen sein, um zusätzlich zur Abrollbewegung derselben eine Oszillationsbewegung oder eine Vibrationsbewegung zu erzeugen. Zur Erfassung des Bewegungszustands der Verdichterwalze 20 können im Inneren derselben Bewegungssensoren, beispielsweise Beschleunigungssensoren, vorgesehen sein, die mit einer Funk-Übertragungseinheit verbunden sind, um Information über den Bewegungszustand der Verdichterwalze zu einer beispielsweise im Bereich einer Führerkabine 24 am Hinterwagen 12 angeordneten Empfangseinheit zu senden. Die im Inneren der Verdichterwalze 20 angeordneten Sensoren bzw. auch die Funk-Übertragungseinheit sind Verbraucher elektrischer Energie, die zum Bereitstellen der Sensorsignale bzw. zum Übertragen derselben als Funksignale mit elektrischer Energie versorgt werden müssen.

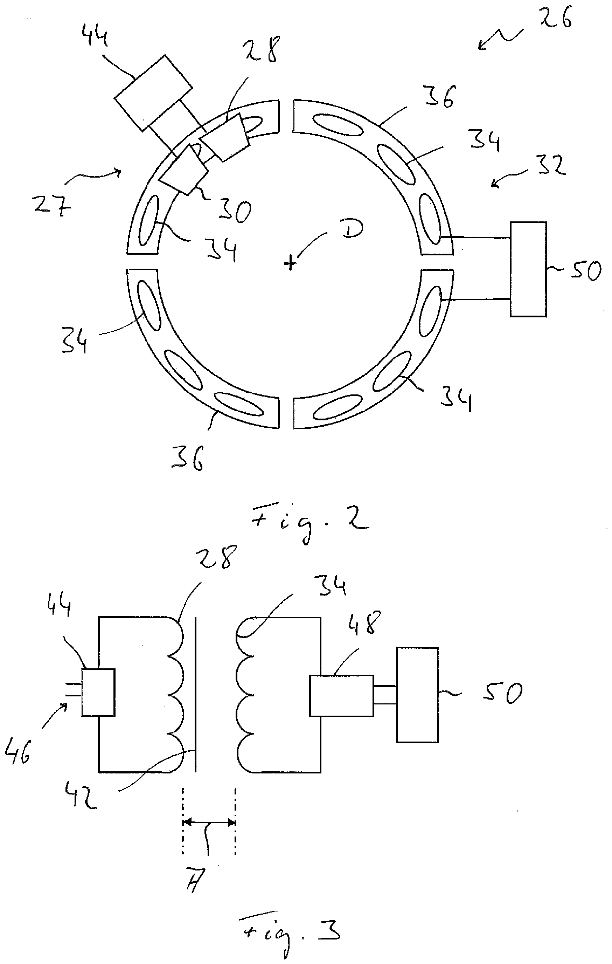

Nachfolgend wird mit Bezug auf die Fig. 2 bis 4 beschrieben, wie gemäß den Prinzipien der vorliegenden Erfindung derartige Verbraucher elektrischer Energie in einem rotierenden Systembereich, also der Verdichterwalze 20 des beispielhaft dargestellten Bodenverdichters 10, mit elektrischer Energie gespeist werden können.

Eine in den Fig. 2 bis 4 im Wesentlichen in prinzipartigen Darstellungen veranschaulichte erfindungsgemäße Induktions-Energieübertragungsanordnung 26 umfasst im dargestellten Beispiel eine Senderanordnung 27 mit zwei Senderspulen 28, 30. Diese sind an einer mit dem drehbaren Systembereich, also der Verdichterwalze 20, nicht drehbaren Baugruppe, beispielsweise bezüglich des Maschinenrahmens 18 feststehend, getragen. Die beiden Senderspulen 28, 30 können dabei so angeordnet sein, dass sie in Umfangsrichtung um die Drehachse des drehbaren Systembereichs, also der Verdichterwalze 20, aufeinanderfolgend angeordnet sind.

An dem rotierenden Systembereich, also im dargestellten Beispiel der Verdichterwalze 20, ist eine allgemein mit 32 bezeichnete Empfängeranordnung vorgesehen. Diese umfasst eine Vielzahl von beispielsweise ebenfalls in Umfangsrichtung um die Drehachse D aufeinander folgend angeordneten Empfängerspulen 34, die in der Umfangsrichtung langgestreckt ausgebildet sind. Im dargestellten Beispiel sind jeweils drei derartige Empfängerspulen 34 an einem kreissegmentartig ausgebildeten Träger 36 getragen. Die insgesamt vier kreissegmentartigen Träger 36 können in der in Fig. 2 dargestellten kreisartigen Konfiguration an dem rotierenden Systembereich, also der Verdichterwalze 20, beispielsweise an einer diese axial abschließenden und einen Walzenmantel 38 tragenden Scheibe 40, festgelegt werden. Die Empfängerspulen 34 sind bezüglich der Drehachse D derart angeordnet, dass sie näherungsweise in demjenigen radialen Bereich liegen, in welchem auch die Senderspulen 28, 30 positioniert sind.

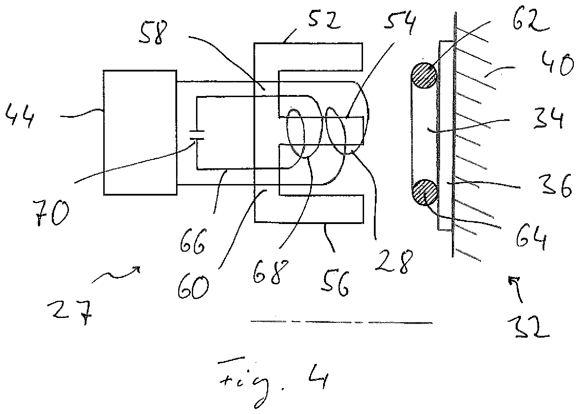

Die Wechselwirkung der Empfängerspulen 34 mit der Senderanordnung 27 bzw. den beiden Senderspulen 28, 30 derselben, wird mit Bezug auf die Fig. 3 und 4 beschrieben.

Die Fig. 3 zeigt beispielhaft die Senderspule 28, welche eine oder mehrere einen schematisch dargestellten Kern 42 vorzugsweise aus Metallmaterial umgebende Windungen aufweisen kann. Die Senderspule 28 steht in Verbindung mit einem Frequenzgenerator 44, welcher mit einem Eingangsbereich 46 an das Bordspannungssystem des Bodenverdichters 10 angeschlossen sein kann und durch dieses beispielsweise mit einer 12V-Gleichspannung versorgt wird. Der Frequenzgenerator 44 erzeugt aus dieser Gleichspannung ein hochfrequentes Wechselspannungssignal, z.B. mit einer Frequenz im Bereich von 100 kHz, und legt dieses an die Senderspule 28 an. Diese erzeugt, verstärkt durch den Kern 42, ein entsprechend hochfrequentes Magnet-Wechselfeld, welches in der in Fig. 3 der Senderspule 28 gegenüberliegenden Empfängerspule 34 eine entsprechende Wechselspannung bzw. einen entsprechenden Wechselstrom induziert. Ein der Empfängerspule 34 zugeordneter Gleichrichter 48 erzeugt aus dieser Wechselspannung eine Gleichspannung, beispielsweise ebenfalls mit 12V, welche an den bzw. die in der Verdichterwalze 20 vorgesehenen Verbraucher elektrischer Energie 50 angelegt werden kann, um diese somit mit elektrischer Energie zu speisen.

Bei Rotation der Verdichterwalze 20 bewegen sich sukzessive die in Umfangsrichtung aufeinander folgenden Empfängerspulen 34 mit einem in Richtung der Drehachse D belassenen Abstand A von etwa 20 mm an der bzw. den Senderspulen 28, 30 vorbei. Während jeder Phase, in welcher eine bzw. mehrere der Empfängerspulen 34 in magnetischer Wechselwirkung mit den Senderspulen 28, 30 ist bzw. sind, wird in den betroffenen Empfängerspulen 34 durch magnetische Induktion eine Wechselspannung bzw. ein Wechselstrom generiert. Da in Zuordnung zu jeder Empfängerspule 34 ein eigenständiger Gleichrichter 48 vorgesehen ist und alle Empfängerspulen 34 bzw. die zugeordneten Gleichrichter 48 zueinander parallel geschaltet sind, ist für eine auch im Rotationsbetrieb im Wesentlichen konstante Versorgung der Verbraucher 50 gesorgt. Dazu trägt insbesondere auch bei, dass die Senderanordnung 27 mehrere, im dargestellten Beispiel zwei, in Umfangsrichtung aufeinanderfolgende Senderspulen 28, 30 umfasst, die jeweils in Erregungswechselwirkung mit dem Frequenzgenerator 44 stehen, so dass der Umfangsbereich, in welchem eine magnetische Wechselwirkung zwischen der Senderanordnung 27 und der Empfängeranordnung 32 generiert wird, derart ausgedehnt ist, dass immer zumindest eine der Empfängerspulen 34 zur Erzeugung einer Wechselspannung durch das magnetische Wechselfeld erregt wird.

Die Fig. 4 veranschaulicht ein Beispiel für den Aufbau der Senderspulen 28, 30, beispielsweise der Senderspule 28 bzw. deren Wechselwirkung mit dem zugeordneten Kern 42. Dieser im Allgemeinen aus Metallmaterial aufgebaute Kern 42 ist im dargestellten Beispiel E-förmig und weist drei E-Schenkel 52, 54, 56 sowie diese miteinander jeweils verbindende E-Stege 58, 60 auf. Um den mittleren der E-Schenkel, also den E-Schenkel 54, ist die eine oder mehrere Windungen umfassende Senderspule 28 gewickelt. Der Kern 42 ist im Wesentlichen so angeordnet, dass die E-Schenkel 52, 54, 56 sich näherungsweise in der Richtung der Drehachse D und auf die Verdichterwalze 20 bzw. die daran vorgesehenen Empfängerspulen 34 zu orientiert sind. Dabei ist vorzugsweise der von der Senderspule 28 umgebene mittlere E-Schenkel 54 in radialer Richtung so positioniert, dass er näherungsweise zentral zwischen einem radial äußeren Spulenbereich 62 und einem radial inneren Spulenbereich 64 einer jeweiligen Empfängerspule 34 positioniert ist. Die beiden äußeren E-Schenkel 52, 56 können diesen radial äußeren bzw. radial inneren Spulenbereichen 62, 64 näherungsweise gegenüberliegend positioniert sein.

Auf diese Art und Weise wird eine sehr effiziente magnetische Wechselwirkung zwischen der Senderspule 28 und den periodisch sich daran vorbeibewegenden

Empfängerspulen 34 gewährleistet werden, wobei diese Empfängerspulen 34 eine oder mehrere nicht notwendigerweise einen Kern umgebende Windungen umfassen.

Um den Wirkungsgrad bei der Energieübertragung von der Senderanordnung 27 auf die Empfängeranordnung 32 zu steigern, ist vorzugsweise in Zuordnung zu jeder Senderspule 28, 30 ein elektrischer Resonanzkreis 66 vorgesehen. Dieser umfasst einen in sich geschlossenen elektrischen Kreis mit einer Resonanzkreisspule 68 und einem Resonanzkreiskondensator 70. Der Resonanzkreis 66 weist somit eine durch die Induktivität der Resonanzkreisspule 68 und die Kapazität des Resonanzkreiskondensators 70 im Wesentlichen definierte Resonanzfrequenz auf. Diese entspricht im Wesentlichen der durch den Frequenzgenerator 44 bereitgestellten Frequenz der an die Senderspule 28 anzulegenden Wechselspannung. Um hier eine möglichst exakte Abstimmung vornehmen zu können, kann beispielsweise der Generator 44 in seiner Frequenz abstimmbar sein, um durch geringfügige Variation dieser Frequenz eine Anpassung an die Resonanzfrequenz des Resonanzkreises 66 vornehmen zu können. Alternativ oder zusätzlich kann beispielsweise auch der Resonanzkreiskondensator 70 in seiner Kapazität veränderbar sein, um die Resonanzfrequenz des Resonanzkreises 66 an die durch den Frequenzgenerator 44 bereitgestellte Frequenz der Wechselspannung anzupassen.

Die Resonanzkreisspule 68 kann, den Kern 42 umgebend, in unmittelbarer Nähe zur Senderspule 28 positioniert sein. Beispielsweise können diese beiden Spulen nebeneinander liegend den gleichen Bereich des Kerns 42, also im dargestellten Beispiel den mittleren E-Schenkel 54 umgebend, angeordnet sein. Grundsätzlich könnte auch eine der Spulen die andere an ihren Außenumfangsbereich umgebend angeordnet werden, so dass eine in Richtung der Drehachse sehr kompakte Bauweise erreicht werden kann.

Bei Beaufschlagung der Senderspule 28 mit der durch den Frequenzgenerator 44 erzeugten Wechselspannung wird der Resonanzkreis 66 zur Schwingung angeregt, wobei aufgrund der vorangehend angesprochenen Frequenzabstimmung der Resonanzkreis 66 mit seiner Resonanzfrequenz und somit sehr hoher Amplitude schwingen wird. Dies verstärkt das durch die Senderspule 28 generierte Magnet-Wechselfeld. Durch den Einsatz eines derartigen Resonanzkreises 66 in Zuordnung zu einer jeweiligen Senderspule 28 bzw. 30 kann der Wirkungsgrad der Induktions-Energieübertragungsanordnung auf etwa 45% gesteigert werden, so dass bei einer Leistungsaufnahme des Frequenzgenerators 44 von etwa 15 W die den Empfängerspulen 34 zugeordneten Gleichrichter 48 eine Leistungsabgabe von etwa 7 W bereitstellen.

Es sei darauf hingewiesen, dass die insbesondere in den Fig. 2 bis 4 im Wesentlichen in prinzipartiger Gestalt dargestellte Induktions-Energieübertragungsanordnung 26 in verschiedensten Aspekten variiert werden kann. So können selbstverständlich mehr oder auch weniger als die dargestellten Empfängerspulen 34 in Umfangsrichtung aufeinanderfolgend angeordnet sein. Auch können radial gestaffelte Ringe von in Umfangsrichtung aufeinander folgenden Empfängerspulen 34 vorgesehen sein, wobei diese vorzugsweise dann in Umfangsrichtung zueinander versetzt liegen. Auch die Anzahl der Senderspulen der Senderanordnung 27 kann variiert werden, ebenso wie der Aufbau der Senderspulen bzw. der mit diesen zusammenwirkenden Kerne. So müssen diese Kerne nicht notwendigerweise E-förmig sein. Auch eine U-förmige oder eine im Wesentlichen halbkreisförmige Gestalt dieser Kerne kann vorgesehen sein. Die Senderspulen können beispielsweise auch an einem der äußeren E-Schenkel vorgesehen sein oder in einem zwei E-Schenkel oder zwei U-Schenkel miteinander verbindenden Stegbereich.

## Patentansprüche

1. Baumaschine, umfassend einen bezüglich eines Maschinenrahmens (18) um eine Drehachse (D) drehbaren Systembereich (20) und an dem drehbaren Systembereich (20) wenigstens einen Verbraucher (50) elektrischer Energie, ferner umfassend eine Induktions-Energieübertragungsanordnung (26) zur drahtlosen Energieübertragung in den drehbaren Systembereich (20), wobei die Induktions-Energieübertragungsanordnung (26) eine Senderanordnung (27) mit wenigstens einer Senderspule (28, 30) und an dem drehbaren Systembereich (20) eine Empfängeranordnung (32) mit wenigstens einer Empfängerspule (34) umfasst,
**dadurch gekennzeichnet,**
**dass** in Zuordnung zu jeder Senderspule (28, 30) ein wenigstens bereichsweise von der Senderspule (28, 30) umgebener Kern (42) vorgesehen ist,
**dass** der Kern (42) E-förmig ausgebildet ist und die Senderspule (28) einen E-Schenkel (54) oder/und E-Steg des Kerns (42) wenigstens bereichsweise umgibt, oder U-förmig ausgebildet ist und die Senderspule (28) einen U-Schenkel oder/und U-Steg des Kerns (42) wenigstens bereichsweise umgibt, dass in Zuordnung zu wenigstens einer Senderspule (28, 30) ein Resonanzkreis (66) vorgesehen ist, wobei der Resonanzkreis (66) eine Resonanzkreisspule (68) und einen Resonanzkreiskondensator (70) umfasst, und
**dass** die Resonanzkreisspule (68) den Kern (42) wenigstens bereichsweise umgebend angeordnet ist.

2. Baumaschine nach Anspruch 1,
**dadurch gekennzeichnet, dass** in Zuordnung zu jeder Empfängerspule (34) ein Gleichrichter (48) zur Bereitstellung einer Gleichspannung vorgesehen ist.

3. Baumaschine nach Anspruch 1 oder 2,
**dadurch gekennzeichnet, dass** die Empfängeranordnung (32) eine Mehrzahl von vorzugsweise in Umfangsrichtung um die Drehachse (D) aufeinanderfolgend angeordneten Empfängerspulen (34) umfasst.

4. Baumaschine nach Anspruch 3,
**dadurch gekennzeichnet, dass** die Empfängerspulen (34) mit wenigstens einem Verbraucher (50) elektrischer Energie parallel verbunden sind.

5. Baumaschine nach einem der vorangehenden Ansprüche,
**dadurch gekennzeichnet, dass** die Senderanordnung (27) wenigstens zwei vorzugsweise in Umfangsrichtung um die Drehachse (D) auf einander folgend angeordnete Senderspulen (28, 30) umfasst.

6. Baumaschine nach einem der vorangehenden Ansprüche,
**dadurch gekennzeichnet, dass** die Senderanordnung (27) einen Frequenzgenerator zur Umwandlung einer an einen Eingang des Frequenzgenerators (44) angelegten Gleichspannung in eine an wenigstens eine Senderspule (28, 30) anzulegende Wechselspannung umfasst.

7. Baumaschine nach Anspruch 6,
**dadurch gekennzeichnet, dass** eine Resonanzfrequenz des Resonanzkreises (66) im Bereich der Frequenz der durch den Frequenzgenerator (44) erzeugten Wechselspannung ist.

8. Baumaschine nach einem der vorangehenden Ansprüche,
**dadurch gekennzeichnet, dass** die Baumaschine ein Bodenverdichter (10) ist, und dass der drehbare Systembereich eine Verdichterwalze (20) ist.

## Claims

1. Construction machine, comprising a system region (20) that can be rotated about an axis of rotation (D) relative to a machine frame (18) and at least one consumer (50) of electric energy in the rotatable system region (20) further comprising an induction energy-transfer assembly (26) for wirelessly transferring energy into the rotatable system region (20), the induction energy-transfer assembly (26) comprising a transmitting assembly (27) having at least one transmitting coil (28, 30) and, in the rotatable system region (20), a receiving assembly (32) having at least one receiving coil (34),
**characterized in that**
in association with each transmitting coil (28, 30), a core (42) is provided which is at least partly surrounded by the transmitting coil (28, 30),
the core (42) is E-shaped and the transmitting coil (28) extends around at least part of an E leg (54) and/or E web of the core (42), or is U-shaped and the transmitting coil (28) extends around at least part of an U leg and/or U web of the core (42),
that, in association with at least one transmitting coil (28, 30), a resonant circuit (66) is provided, wherein the resonant circuit (66) comprises a resonant circuit coil (68) and a resonant circuit capacitor (70),
and
the resonant circuit coil (68) is arranged so as to extend around at least part of the core (42).

2. Construction machine according to claim 1,
**characterized in that**, in association with each receiving coil (34), a rectifier (48) is provided for providing a direct voltage.

3. Construction machine according to claim 1 or 2,
**characterized in that** the receiving assembly (32) comprises a plurality of receiving coils (34), which are preferably arranged one after the other in the circumferential direction around the axis of rotation (D).

4. Construction machine according to claim 3,
**characterized in that** the receiving coils (34) are connected to at least one consumer (50) of electric energy in parallel.

5. Construction machine according to one of the preceding claims,
**characterized in that** the transmitting assembly (27) comprises at least two transmitting coils (28, 30), which are preferably arranged one after the other in the circumferential direction around the axis of rotation (D).

6. Construction machine according to one of the preceding claims,
**characterized in that** the transmitting assembly (27) comprises a frequency generator for converting a direct voltage applied to an input of the frequency generator (44) into an alternating voltage to be applied to at least one transmitting coil (28, 30).

7. Construction machine according to claim 6,
**characterized in that** a resonance frequency of the resonant circuit (66) is in the range of the frequency of the alternating voltage produced by the frequency generator (44).

8. Construction machine according to one of the preceding claims,
**characterized in that** the construction machine is a soil compactor (10) and that the rotatable system region is a compactor roller (20).

## Revendications

1. Machine de construction, comprenant une région de système (20) qui peut être tournée autour d'un axe de rotation (D) par rapport à un châssis de machine (18) et au moins un consommateur (50) d'énergie électrique dans la région de système rotative (20), comprenant en outre un ensemble de transfert d'énergie par induction (26) pour transférer sans fil de l'énergie dans la région de système rotative (20), dans lequel l'ensemble de transfert d'énergie par induction (26) comprend un ensemble d'émission (27) ayant au moins une bobine d'émission (28, 30) et, dans la région de système rotative (20), un ensemble de réception (32) ayant au moins une bobine de réception (34),
**caractérisé en ce que**
en association avec chaque bobine d'émission (28, 30), un noyau (42) est prévu qui est au moins partiellement entouré par la bobine d'émission (28, 30),
**en ce que** le noyau (42) est en forme de E et la bobine d'émission (28) s'étend autour d'au moins une partie d'une branche E (54) et/ou d'une entretoise E du noyau (42), ou est en forme de U et la bobine d'émission (28) s'étend autour d'au moins une partie d'une branche U (54) et/ou d'une entretoise U du noyau (42),
**en ce que**, en association avec au moins une bobine d'émission (28, 30), un circuit résonnant (66) est prévu, dans lequel le circuit résonnant (66) comprend une bobine de circuit résonnant (68) et un condensateur de circuit résonnant (70),
et
la bobine de circuit résonant (68) est disposée de manière à s'étendre autour d'au moins une partie du noyau (42).

2. Machine de construction selon la revendication 1,
**caractérisé en ce que,** en association avec chaque bobine de réception (34), un redresseur (48) est prévu pour fournir une tension continue.

3. Machine de construction selon la revendication 1 ou 2,
**caractérisé en ce que** l'ensemble de réception (32) comprend une pluralité de bobines de réception (34), qui sont de préférence disposées l'une après l'autre dans la direction circonférentielle autour de l'axe de rotation (D).

4. Machine de construction selon la revendication 3,
**caractérisé en ce que** les bobines de réception (34) sont connectées à au moins un consommateur (50) d'énergie électrique en parallèle.

5. Machine de construction selon l'une des revendications précédentes,
**caractérisé en ce que** l'ensemble d'émission (27) comprend au moins deux bobines d'émission (28, 30), qui sont de préférence disposées l'une après l'autre dans la direction circonférentielle autour de l'axe de rotation (D).

6. Machine de construction selon l'une des revendications précédentes,
**caractérisé en ce que** l'ensemble d'émission (27) comprend un générateur de fréquence pour convertir une tension continue appliquée à une entrée du générateur de fréquence (44) en une tension alternative à appliquer à au moins une bobine d'émission (28, 30).

7. Machine de construction selon la revendication 6,
**caractérisé en ce qu**'une fréquence de résonance du circuit résonnant (66) est dans la gamme de la fréquence de la tension alternative produite par le générateur de fréquence (44).

8. Machine de construction selon l'une des revendications précédentes,
**caractérisé en ce que** la machine de construction est un compacteur de sol (10) et **en ce que** la région du système rotatif est un rouleau de compacteur (20).
